# EUROPEAN PATENT SPECIFICATION

(11) **EP 2 705 426 B1**
(45) Date of publication and mention of the grant of the patent: **07.10.2015**
(21) Application number: 11865026.6
(22) Date of filing: 06.05.2011
(51) Int. Cl.: G06F 9/44, G06F 9/54

(54) **CONFIGURABLE INPUT/OUTPUT PROCESSOR**
KONFIGURIERBARER EIN-/AUSGABEPROZESSOR
PROCESSEUR D'ENTRÉE/SORTIE CONFIGURABLE

(43) Date of publication of application: 12.03.2014
(73) Proprietor: SAAB AB, 581 88 Linköping (SE)
(72) Inventor: HÅKEGÅRD, Jan, S-583 33 Linköping (SE); DANIELSSON, Torkel, S-587 29 Linköping (SE); GRIPSBORN, Anders, S-590 74 Ljungsbro (SE)
(74) Representative: Zacco Sweden AB
(86) International application number: PCT/SE2011/050574
(87) International publication number: WO 2012/154092

(56) References cited:
- WO-A2-01/86442
- WO-A2-01/86442
- US-A1- 2011 066 763
- US-A1- 2011 066 763
- ALENA R L ET AL: "Communications for Integrated Modular Avionics", AEROSPACE CONFERENCE, 2007 IEEE, IEEE, PISCATAWAY, NJ, USA, 3 March 2007 (2007-03-03), pages 1-18, XP031214239, ISBN: 978-1-4244-0524-4
- PAUL J PRISAZNUK: "ARINC 653 role in Integrated Modular Avionics (IMA)", DIGITAL AVIONICS SYSTEMS CONFERENCE, 2008. DASC 2008. IEEE/AIAA 27TH, IEEE, PISCATAWAY, NJ, USA, 26 October 2008 (2008-10-26), pages 1.E.5-1, XP031372551, ISBN: 978-1-4244-2207-4
- LEWIS J ET AL: "Certification concerns with integrated modular avionics (IMA) projects", 22ND. DASC. THE 22ND. DIGITAL AVIONICS SYSTEMS CONFERENCE PROCEEDINGS. INDIANAPOLIS, IN, OCT. 12 - 16, 2003; [DIGITAL AVIONICS SYSTEMS CONFERENCE], NEW YORK, NY : IEEE, US, 12 October 2003 (2003-10-12), pages 1.A.3-1.1, XP031961870, DOI: 10.1109/DASC.2003.1245803 ISBN: 978-0-7803-7844-5
- ALENA R. L. ET AL.: 'Communications for Integrated Modular Avionics' AEROSPACE CONFERENCE, 2007 IEEE 2007, PISCATAWAY, NJ, USA, XP031214239
- PRISAZNUK P. J.: 'ARINC 653 role in integrated modular avionics (IMA)' 2008 IEEE/AIAA 27TH DIGITAL AVIONICS SYSTEMS CONFERENCE 2008, PISCATAWAY, NJ, USA, XP031372551

## Description

### Technical field

The present invention relates to a configurable device and a method for configuration of the configurable device.

In particular the invention is related to a configurable input/output processor for distributed avionics and a method for configuration of the configurable input/output processor.

Furthermore, the invention relates to software adapted to perform steps of the configuration method when executed on a computer.

### Background of the Invention

In embedded control systems of today, developments in digital technology have enabled complex functionality. However as a direct result from the development, the need of additional system capacity provided by software and various components such as sensors, processors, display units, data buses and memory units is increasing.

Apart from implementing more functionality and interconnectivity in control systems, using less Space-Weight-and-Power, (SWaP) and a reduced number of cabling are further important drivers. Updates of embedded hardware and software during a products life span make adaptability and modularity another interesting design parameter. Other incentives include achieving cost efficient development, production and maintenance, where one possible route is to implement Commercial-Of The-Shelf (COTS) technology instead of expensive specialized technology.

Real-time systems for safety critical control applications, wherein typically data from sensor/s are acquired, communicated and processed to provide a control signal to an actuator pose strict demands regarding bandwidth, data delivery time, redundancy, and integrity. Failure to meet one or several of these demands can in applications including "brake-by-wire" or "steer-by-wire" prove dangerous.

One such area wherein reliable high-speed real-time execution and communication of data is applicable is within avionics systems. Advances in technology during late 1960 and early 1970 made it necessary to share information between different avionics subsystems in order to reduce the number of Line Replaceable Units (LRU:s). A single sensor such as a position sensor provided information to weapon systems, display system, autopilot and navigation system.

The high level architecture of avionics systems has gone from federated meaning separate LRU:s for separate functions to Integrated Modular Avionics (IMA) meaning several functions integrated into multifunctional LRU:s. The connectivity allowing communication between different LRU: s has gone from low bandwidth point-to-point connections to higher bandwidth bus connections.

Guidance set out by Radio Technical Commission for Aeronautics (RTCA) in DO-178B and RTCA DO-254 regulates how to design and develop software and respective hardware in a safe way in order to show airworthiness, according to a criticality scale. However certification and subsequent recertification of software according to the DO-178B represents a substantial cost of developing software based avionic control systems.

In order to assist development of modem control systems for avionics a set of guidance documents such as RTCA DO-297 and Aeronautical Radio Inc. (ARINC) 651 defines general concepts for IMA systems. Further ARINC 653 "Avionics application software standard interface", defines an Application Program Interface (API) referred to as Application Executive (APEX), implemented in Real-Time Operating Systems (RTOS) used for avionic control systems. APEX allows for space and time partitioning that may be used wherever multiple applications need to share a single processor and memory resource, in order to guarantee that one application cannot bring down another in the event of application failure.

Configuration of one or more component associated to an ARINC 653 based RTOS for an avionics control system is typically performed by manually entering a large number of configuration data and parameters. Configuration may relate to providing configuration data for one or more of the following components, a control system processor, an input/output processor and a network switch. The configuration of an IMA system and the associated applications may require a specification that is several thousand lines long. The configuration data and parameters dictate for example conditions for the space and time partitioning and data communication ports. Using DO-297 notation, a number of different engineering teams such as hardware platform providers, software application developers and system integrators usually partake in the process of designing and configuring an avionics control system. It is a complex task to ensure a correct configuration is due to dependencies between multiple configuration data, associated to hardware and software. This is especially the case in an avionics control system comprising a large number software and hardware components. Modifications of the avionics control system performed by one of the engineering team can affect the work already performed by the other teams. Verification and validation of configuration data is typically performed by an iterative procedure comprising providing the configuration data to the avionics control system and subjecting the avionics control system to extensive test procedures to ensure proper function. The outcome of the test procedure may result in an accurate set of configuration data or in a new set of configuration data to be provided to the avionics control system for testing.

Reference is mode to the patent application US 2011/066763.

However, moving from centralized avionics control system in attempts to reduce costs and increase modularity tends to decrease determinism with respect to time and increase complexity related to system configuration.

Accordingly, there is a need in the art of avionics to present improved methods, intended to facilitate system configuration and enhance adaptability.

### Objective of the Invention

It is therefore an objective of the present invention to provide a configurable input/output processor, a method for configuring the configurable input/output processor and a computer program performing said configuration method, that facilitates modularity, configuration and achieve increased adaptability related to data traffic processing within a distributed avionics system.

### Summary of the Invention

This objective is achieved according to the present invention by a method for configuring at least one configurable input/output processing device arranged to communicate with at least one processing node associated to a distributed avionics control system comprising a plurality of processing nodes interconnected in a network, wherein each of the plurality of processing nodes is connected to the network via at least one of said configurable input/output processing device, wherein the plurality of processing nodes are arranged to execute a plurality of applications. The method is comprises the steps of: providing first instructions to the at least one configurable input/output processing device, said first instructions comprising processing information for the at least one configurable input/output processing device and being independent of a current configuration of the distributed avionics control system, providing second instructions to the at least one configurable input/output processing device, said second instructions being dependent on the current configuration of the distributed avionics control system.

It is achieved that the configuration of the at least one configurable input/output processing device can be performed utilizing two separated instructions. The first instructions can be subjected to a single certification process. Subsequent modifications of hardware or software associated to the distributed avionics control system do not require a modification of the already certified first instructions since the first instructions of the two separated instructions are independent of the configuration of the distributed avionics control system. The subsequent modifications may for example relate modifications associated to instantiating new processing nodes, hardware topology and software.

It is further achieved that validation of the second instructions is facilitated since system independent instructions such as for example code comprising operators and functions associated to the input/output processing device can be arranged in the first instructions. The second instructions may be constructed to comprise information related to attributes being dependent on the system architecture such as for example one or more control tables describing the current system architecture with its associated routing and one or more communication schedules. Hence, certification of the configurable input/output processing device is facilitated since the certification procedure of the first and second instructions can be performed separately. In more detail, the certification procedure is simplified by virtue of that validation of the second instructions is facilitated since validation of the one or more control tables is a less complex procedure than certification of code comprising operators and functions. Furthermore, automatic i.e. machine based validation of the second instructions is simpler than automatic validation of code, since among other things the number of degrees-of freedom (DOF) in the second instructions is vastly reduced as compared to code. Thus, the configuration procedure of the at least one input/output processor that is required after modifications of the distributed avionics control system can be limited to providing a modification of the second instructions rather than providing a modification of the first and second instructions grouped as a single instruction set.

It is further achieved that proper time determinism and routing associated to the current system architecture can be easily verified by virtue of being separated into the second instructions.

In one option the method is further characterized in that the first instructions comprise attributes independent of bus routing and bus traffic associated to the distributed avionics control system and wherein the second instructions comprise attributes dependent on information routing and bus traffic.

In one option the method is further characterized in the step of providing the first instructions comprise providing routines related to at least one set of core control routines said at least one set of core control routines being arranged to provide instructions for the at least one input/output processing device relating to at least one operation of a group of operations comprising at least data format conversion, bus control operations, data validity control and bus time control operations.

In one option the method is further characterized in that the step of providing the second instructions comprise providing instructions related to at least one system control table, said at least one system control table being arranged to provide instructions for the at least one input/output processing device relating to at least one operation of a group of operations comprising at least bus routing protocol and at least one bus traffic time schedule.

In one option the method is further characterized in that the step of providing the first instructions to the at least one input/output processing device is only performed once irrespective of modifications associated to the distributed avionics control system..

In one option the method is further characterized in that the method for configuring the at least one configurable input/output processing device is applied to the distributed avionics control system, wherein each of the plurality of nodes in the distributed avionics control system is arranged to be compliant with an ARINC 653 standard.

This objective is also achieved according to the present invention by a configurable input/output processing device arranged to control data traffic associated to a distributed avionics control system comprising a plurality of processing nodes interconnected in a network, wherein each of the plurality of processing nodes is connected to the network via at least one of said configurable input/output processing device, the configurable input/output processing device comprising: memory means arranged to store information associated to data traffic and information associated to configuration data controlling the operations of the input/output processing device, at least one processing means arranged to control data traffic based on the information associated to configuration data. The configurable input/output processing device comprising: first instructions stored on the memory means of the at least one input/output processing device, said first instructions comprising processing information for the at least one input/output processing device and being independent of a current configuration of the distributed avionics control system, second instructions stored on the memory of the at least one input/output processing device, said second instructions being dependent on the current configuration of the distributed avionics control system.

In one option the configurable input/output processing device is further characterized in that the first instructions comprise routines related to at least one set of core control routines said at least one set of core control routines comprising instructions for the at least one input/output processing device relating to at least one operation of a group of operations comprising at least data format conversion, bus control operations, data validity control and bus time control operations.

In one option the configurable input/output processing device is further characterized in that the second instructions comprise instructions related to at least one system control table, said at least one system control table being arranged to provide instructions for the at least one input/output processing device relating to at least one operation of a group of operations comprising at least bus routing protocol and at least one bus traffic time schedule.

In one option the configurable input/output processing device is further characterized in that the first instructions associated to the at least one input/output processing device is arranged to be configured once irrespective of modifications associated to the distributed avionics control system.

This objective is also achieved according to the present invention by a distributed avionics control system comprising a plurality of processing nodes interconnected in a network, wherein each of the plurality of processing nodes is connected in the network via at least one of said configurable input/output processing device according to any of the claims 7-10.

This objective is also achieved by a computer programme comprising a programme code for performing the above described method steps, when said computer programme is run on a computer.

This objective is also achieved by a computer programme product comprising a program code stored on a computer readable media for performing the above described method steps, when said computer programme is run on the computer.

This objective is also achieved by a computer programme product directly storable in an internal memory of a computer, comprising a computer programme for performing the above described method steps, when said computer programme is run on the computer.

### Brief Description of the Drawings

Fig.1. shows schematically a distributed avionics system in accordance with an example of the invention.
Fig.2. shows schematically the distributed avionics system integrated to components of an aerial vehicle in accordance with an example of the invention.
Fig.3. shows a schematic block diagram of hardware components of the distributed avionics system in accordance with an example of the invention.
Fig.4. illustrates a schematic representation of an input/output processor in accordance with an example of the invention.
Fig.5. illustrates a schematic representation of an input/output processor in more detail in accordance with an example of the invention.
Fig.6. illustrates a schematic representation of a portion of the software architecture in more detail.
Fig.7. shows a schematic illustration of a flow diagram for a method to configure the input/output processor in accordance with an example of the invention.

### Detailed Description

The present disclosure describes a configurable input/output processor, a method and computer program for configuring the configurable input/output processor arranged to be implemented in an embedded distributed control computer environment. The configurable input/output processor is arranged to facilitate modifications related to software and/or hardware associated to the embedded distributed control computer environment so as to reduce the amount of work needed to configure the input/output processor based on the above mentioned modifications.

The present invention is described to a large extent in this specification with reference to a system and method for configuration of the embedded distributed control computer environment associated to an aerial vehicle. However, various different applications are possible, e.g. for use in land, sea or space vehicles. The vehicles may be military vehicles such as for example fighter jets, destroyers, un-manned combat aerial vehicles (UCAV:s) or civilian/commercial vehicles such as for example cars, commercial airliners, cruise ships, cargo ships, satellites or other types of vehicles known within the art.

The person skilled in the art will recognize that any computer system or systems that comprises suitable programming and/or processing means for operating in accordance with the disclosed method falls within the scope of the present invention. The suitable programming means may comprise any means for controlling a computer system to cause the computer system to execute the steps associated to the inventive method. The suitable programming means may for example comprise a processing unit or logic circuits coupled to a computer memory or electronic circuits which have the ability to store data such as for example machine readable instructions and/or program instructions. The computer memory being arranged to store the machine readable instructions and/or the program instructions for execution by a processing unit such as for example the processing means. The present invention may also in one example be performed by means of a computer program product, such as a ROM (Read only memory), for example a CD-ROM, DVD, semiconductor ROM or other suitable recordable medium capable of storing machine readable instructions for use in any suitable data processing system. Thus, any computer system comprising means for performing the steps of the method of the present invention stored on the computer program product is capable of executing said steps.

The person skilled in the art will also understand that apart from implementing the method of the present invention in any computer system the present invention can as well be implemented as separate hardware components, a single hardware component or firmware or any combination thereof.

Referring to the drawings, and initially to **fig**. **1**, there is illustrated a distributed avionics computer system comprising one or more input/output processor arranged to be configured according to an example of the present invention. The distributed avionics computer system may comprise a plurality of interconnected avionics computers **S1-S4** arranged to be mounted in various locations of an aerial vehicle **1** and act as controller of at least one or a set of subsystems of the aerial vehicle **1**, such as act as a controller of a fuel injection system or hydraulics of an aileron.

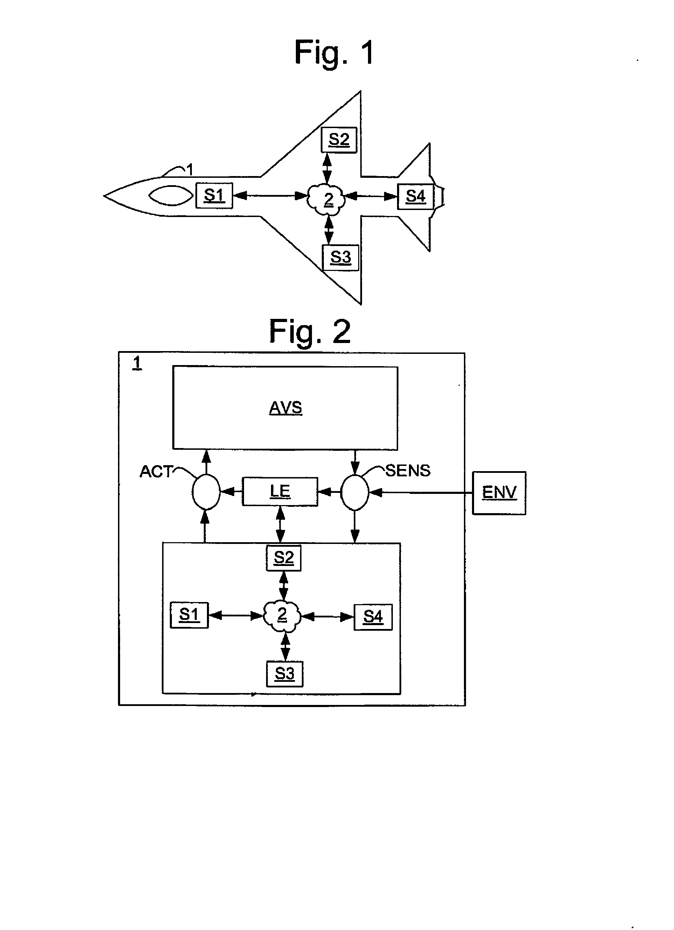

In **fig. 2** there is illustrated an alternative view of the distributed avionics computer system comprising the one or more input/output processors arranged to be configured, viewed as integrated systems/components of the aerial vehicle **1**. The set of avionics subsystems **AVS** may comprise systems such as for example ailerons, flaps fuel injection and payload. The distributed avionics computer system may comprise a plurality of interconnected avionics computers **S1-S4.** At least one or more of the avionics computers may be a general purpose computer arranged as a flight control computer (FCC) and/or a mission control computer (MCC), arranged to be in communicative connection with various avionics subsystems **AVS** and additional systems and/or components such as sensors **SENS**, actuators **ACT** and one or more control stations. The sensors **SENS** may provide information related to properties of the various avionics subsystems **AVS** and of an operating environment **ENV** surrounding the aerial vehicle **1**. The one or more control stations may provide information related to interactions from one or more operators of the aerial vehicle **1**. The distributed avionics computing system may be arranged to process the information provided from one or more of the sensors **SENS** and/or control stations, in order to provide control data to the one or more actuators **ACT** and/or presentation data to the control stations. The distributed avionics computer system may be coupled to at least one legacy avionics processing component **LE**, such as for example a legacy LRU arranged as a radar processing unit, arranged to be in communicative connection with the various avionics subsystems **AVS** and additional systems and/or components such as sensors **SENS**, actuators **ACT** and the one or more control stations.

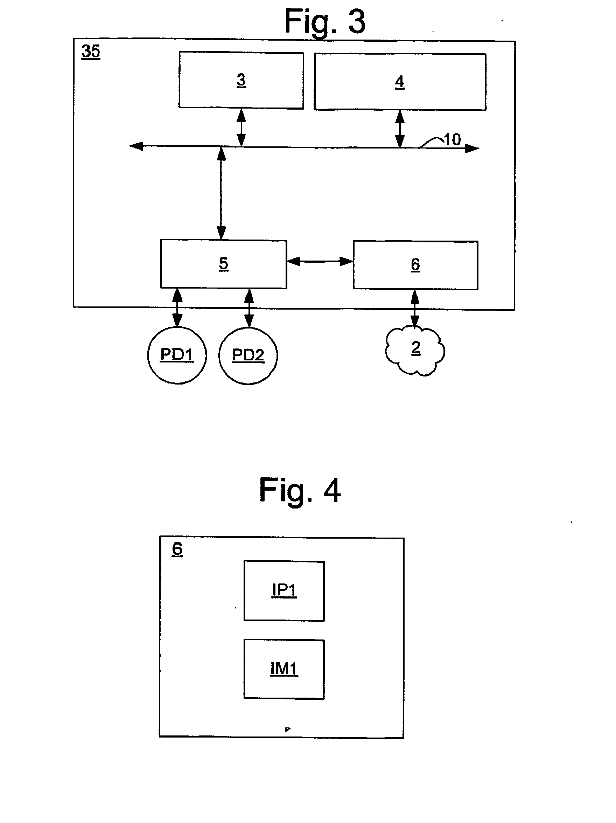

With reference to **fig. 3** a hardware configuration of one of the plurality of avionics computers **S1** to be configured is illustrated in accordance with an example of the invention. Each of the plurality of avionics computers **S1**-**S4**, hereinafter referred to as nodes **S1**-**S4**, may comprise at least a central processor **3**, memory **4**, hardware clock (not shown), power supply (not shown), I/O interface **5**, input/output (I/O) processor **6** and at least one communication medium **10**. The at least one central processor **3** is hereinafter referred to as the at least one application processor **3** throughout the description. The at least one communication medium **10** may comprise one or more buses, bridges and controllers typically found in modern computer systems. The I/O interface **5** may be arranged to provide access to system peripherals **PD1-PD2** e.g. devices coupled to the respective node by means of VME, PCI, PCIe or the like. The distributed system may further comprise at least one network **2**, such as for example a switched Ethernet network, operatively connecting at least two of the nodes **S1-S4**, thereby enabling exchange of data messages between the nodes. Access to the at least one network **2** may be provided by the respective I/O processor **6** which may be arranged to place data messages to and/or retrieve data messages from the network **2** in accordance with one or more input/output (I/O) instructions associated to the I/O processor. The term I/O instruction is used throughout the description to denote instructions i.e. program code, control tables, device drivers and/or other suitable instructions known within the art arranged to be orchestrated by the I/O processor. The I/O processor **6** may further be arranged to provide access by means of one or more additional connections to remote devices such as for example remote data concentrators (RDC:s), sensors and/or actuators. The one or more connections to the other devices may be point-to-point connections such as discreet analogue/digital, RS-422 or of bus type such as MIL-STD-1553, IEEE 1394, or other suitable type of connection known within the art.

In one example the I/O processor **6** may be arranged in a standalone mode to operate as a RDC. In this case the I/O processor **6** may be coupled to one or more of the plurality of the nodes **S1-S4** via the at least one network **2**, at least one additional I/O processor **6** associated to one or more of the plurality of nodes **S1-S4** and additional components such as for example sensors **SENS**.

In one example the at least one application processor **3** and the I/O processor **6** together with their associated components may be integrated to form a single unit also referred to as a distributed computing module (DCM).

In one example two or more of the plurality of nodes **S1-S4** may be arranged to share a single I/O processor **6**.

In one example with reference to **fig. 4** the I/O processor **6** comprise at least one processor **IP1** and at least one memory unit **IM1.** The at least one processor may for example be a microprocessor, programmable device, Field Programmable Gate Array (FPGA) or any other processing device known within the art. The at least one memory **IM1** unit may be a Random Access Memory (RAM) unit and/or a non-volatile memory unit such as a Read Only Memory (ROM), optical disc drive, magnetic disc drive, flash memory, Electrically Erasable Read Only Memory (EEPROM) or any combination thereof. The at least one memory unit **IM1** may comprise instructions to enable the at least one processor **IP1** to provide services enabling the inventive methods according to examples of the present invention. The I/O processor is operatively coupled to the memory **4** such as for example operatively coupled to the memory **4** via a memory bus accessible to the I/O interface **5**. The I/O processor **6** may then be arranged to access the memory **4** associated to the at least one application **1** processor **3** based on that the I/O processor as an example may be arranged to implement a direct memory access (DMA) scheme. Thereby, the I/O processor **6** is provided with access to the memory **4** associated to the at least one application processor **3** without substantial involvement of the at least one application processor **3.**

It is to be noted that memory configuration may be implemented differently than the illustrated examples with reference to **fig. 3** and **fig. 4****.** As an example both the I/O processor **6** and the at least one application processor **3** of a node **S1-S4** may be arranged to share a single memory unit.

In one example the at least one application processor **3** is provided with access to the memory unit **IM1** of its associated I/O processor **6**. In this case the I/O processor **6** is arranged to temporary store information relating to data messaged to be placed on the at least one network **2** and/or data messages to be retrieved from the at least one network **2** on its associated memory unit **IM1**. The at least one application processor **3** is then arranged to transfer information back and forth to the memory unit **IM1** of the associated I/O processor **6.**

In case one or more of the plurality of processing nodes **S1-S4** comprises a plurality of application processors **3,** the I/O processor **6** may in addition to handle communication externally also be arranged to handle communication internally via a backbone such as for example a system bus i.e. arranged to handle communication between the plurality of application processors **3**.

It is to be noted that the I/O processor **6** may comprise one or more additional components and/or data structures such as for example one or more multiplexer/de-multiplexer, one or more synchronization first in first out (FIFO) data structure or other additional components/structures known within the art.

In one example the at least one application processor **3** of each of the nodes **S1-S4** is arranged to perform its operations based on initiating and orchestrating each operation related to one or more computational task assigned to one or more of the at least one nodes. The I/O processor **6** associated to one or more of the at least one node is arranged to perform its associated operations in response to one or more tasks associated to communication of data initiated by the at least one application processor **3** based on orchestrating one or more of the I/O instructions. The interaction between the I/O processor **6** and the at least one application processor 3 may for example be implemented based on an interrupt scheme. Hence, while the I/O processor **6** is busy orchestrating one or more of the I/O instructions the at least one application processor **3** can continue with another task.
It is to be noted that the interaction between the at least one application processor **3** and the I/O processor **6** may be implemented in an alternate fashion such as for example based on a master/slave synchronization configuration, wherein the I/O processor **6** is arranged to initate all operations associated to communication.

As an example the I/O processor **6** may be arranged to notify the at least one application processor **3** that a communication event has occurred by means of an interrupt. The at least one application processor **3** may then be arranged to respond to the interrupt based on issuing an instruction to read data provided from the I/O processor **6**.

In one example the at least one application processor **3** is arranged to inform the I/O processor **6** about the location of the one or more of the I/O instructions.

In one example the I/O processor **6** may be coupled to the at least one network **2** via one or more interface adapter such as for example an IEEE Ethernet compliant interface adapter, a MIL-STD 1553 compliant interface adapter, any other interface adapter known within the art or any combination thereof.

The I/O processor **6** is arranged to control one or more aspects related to data communication based on the one or more I/O instructions. The one or more aspects related to data communication may relate to controlling read and/or write operations associated to one or more data flows. The one or more data flows may comprise bi-directional communication of data provided from the memory **4** associated to at least a first control computer **S1** of the plurality of control computers **S1-S4** and data provided from the memory **4** associated to at least one control computer of the plurality of control computers **S1-S4** different than said at least first control computer **S1**.

In one example the one or more aspect related to data communication arranged to be controlled by the I/O processor may further comprise one or more of the following operations formatting data, packing data, selecting data components, validating received data, forwarding data components, maintaining the status of interfaces with the at least one application processor of the node associated to the I/O processor and maintaining status of interfaces with the other nodes of the plurality of nodes.

As an example the one or more instructions arranged to be processed by the I/O processor may comprise instructions on which data port to retrieve data variables, how to convert data variables arranged to be exported from a first application written in ADA hosted on a first node **S1** into a suitable format for transmission onto the at least one network **2** in a predetermined time-slot of for example the periodically repeating Time Division Multiple Access (TDMA) type schedule and how to convert the data variables for importing via at least a second data port into to a second application written in C++ hosted on a second node **S2**.

In one example the one or more I/O instructions or portions thereof may be generated using a suitable type of markup language such as for example extensible Markup Language (XML).

In one example the one or more I/O instructions or portions thereof may be generated automatically using an automatic tool based on information relating to the current system configuration (hardware and software).

In one example the I/O processor may be arranged to transform received data and/or data to be transferred based on re-structuring a format associated to the data. As an example the I/O processor **6** may be arranged to transform received data from an integer to a floating point format based on a packing operation and then store the data in the floating point format in the memory **4** associated to the at least one application processor **3** so as to provide a suitable format for the at least one application processor and/or one or more of its associated tasks.

In one example the I/O processor may be arranged to process I/O instructions arranged to cause the I/O processor to perform one or more operation related to validity control of data communicated on the at least one network **2** such as for example one or more of the following operations range test, checksum and/or cyclic redundancy check (CRC). As an example all communicated data may be provided with a checksum at the sending node such as for example a cyclic redundancy check (CRC) and/or other error correcting code (ECC). The checksum can be verified at a receiving I/O processor in order to control integrity of the received data.

In one example the I/O processor may be arranged to process I/O instructions arranged to cause the I/O processor to perform selection of data components. As an example the I/O instructions may be arranged to cause the I/O processor to select one or more data component from one or more sources accessible to the I/O processor. The selected one or more data component may be selected based on information provided by the I/O instructions. The one or more sources can for example be one or more memory areas arranged to store data associated to one or more task and/or software application arranged to be orchestrated by the at least one application processor **3**. The one or more memory areas may for example be arranged on the memory unit **4** of the at least one application processor **3**. Other examples of sources may be IEEE Ethernet, additional communication buses such as MIL-STD-1553, IEEE 1394 or other suitable information carriers such as discreet analogue/digital, RS-422 or other suitable carriers.

In one example the I/O instructions may be arranged to cause the I/O processor to read the selected one or more data components from the one or more sources and insert them into at least one data message.

In one example the I/O instructions may be arranged to cause the I/O processor to transmit the at least one data message to a different I/O processor or other suitable I/O device associated to at least one of the one or more nodes **S1-S4** via the at least one network **2**. The at least one data message to be transmitted may for example be transmitted in a format compliant with the at least one network **2** using unicast, multicast or broadcast.

In one example the I/O instructions may be arranged to cause the I/O processor to transmit the at least one data message at one or more particular points in time. The one or more particular points in time determined by the I/O instructions may correspond to one or more bus timing schedules.

In one example the I/O instructions may be arranged to cause the I/O processor to fetch one or more selected data components from a received data message and write data from the one or more selected data components to the one or more sources.

It is to be noted that the I/O instructions may be arranged to cause the I/O processor to fetch one or more selected data components from a plurality of received data messages and write data from the one or more selected data components to the one or more sources. The plurality of received data messages may as an example be received in the I/O processor via one or more of the following carriers: the at least one network **2**, MIL-STD-1553, IEEE 1394, discreet analogue, digital, RS-422 or other suitable carriers.

In one example the I/O processor may be arranged to process instructions arranged to cause the I/O processor to perform forwarding of data components such as for example forwarding of data components between several available networks coupled to the I/O processor such as for example between a MIL-STD 1553 network and a IEEE Ethernet network. As an example the I/O processor may receive one or more data components compiled into a data message via a first IEEE Ethernet network coupled to the I/O processor. The I/O processor may then forward the one or more received data components to a first MIL-STD 1553 network coupled to the I/O processor after performing a formatting operation arranged to transform the received data components into a format compliant with the MIL-STD 1553 network protocol.

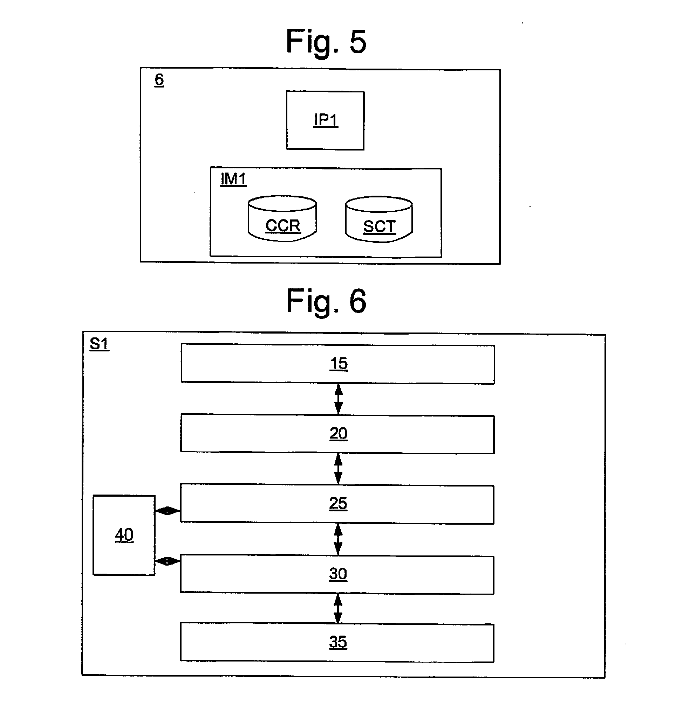

In one example with reference to **fig. 5** the one or more I/O instructions or portions thereof for each I/O processor are separated into at least two separate I/O instruction sets. The one or more I/O instructions or portions thereof may be separated into the at least two separate I/O instruction sets based on one or more type of content defined by each one or more I/O instructions or portions thereof.

In one example the type of content defined by each one or more I/O instructions or portions thereof used to separate the one or more I/O instructions into the at least two I/O instruction sets is data or information describing bus routing, traffic scheduling or portions thereof.

In more detail the one or more I/O instructions may be separated into the at least two separate I/O instruction sets based on if the if each individual I/O instructions comprise code such as for example functions and operators that are independent on a current configuration of the distributed avionics computing system or not.

In one example the at least two separate I/O instruction sets may be constructed individually. The at least two separate I/O instruction sets may be provided to each associated I/O processor separately such as for example separately uploaded to the memory **IM1** of the associated I/O processor.

A first of the at least two separate I/O instruction sets also referred to as core control routines **CCR** may comprise instructions associated to causing the I/O processor to perform system generic data input/output operations.

The core control routines **CCR** are arranged to provide instructions for the I/O processor that are independent on the configuration of the distributed avionics computing system. As an example I/O instructions that are independent on the configuration of the distributed avionics computing system are I/O instructions that are independent on bus routing and traffic scheduling associated to the configuration of the distributed avionics computing system. As an example the core control routines **CCR** may comprise one or more I/O instructions causing the I/O processor **6** to perform one or more of the following operations: formatting data, packing of data into one or more data message, un-packing of data from one or more data message, bus monitoring, data validation, time synchronization, time monitoring.

A second of the at least two separate I/O instruction sets also referred to as a system control table **SCT** may comprise instructions associated to cause the I/O processor to perform system specific data input/output operations. It is to be noted that more than one separate system control table may be implemented for each I/O processor.

The system control table **SCT** is arranged to provide instructions for the I/O processor that are dependent on a current configuration the distributed avionics computing system. As an example I/O instructions that are dependent on the configuration of the distributed avionics computing system are I/O instructions that describe one or more properties related to bus routing and/or traffic scheduling associated to the configuration of the distributed avionics computing system. As an example the system control table **SCT** may comprise instructions for instructing the I/O processor how to perform one or more of the following operations: selecting which data to pack into a message, selecting which data to un-pack from a message, determining the timing of packing and/or un-packing data operations, determining recipients of a message, determining recipients of data from a message.

In one example the system control table **SCT** may comprise at least one bus routing protocol and at least one bus traffic time schedule.

In one example the I/O processor **6** is arranged to perform its operations based on orchestrating the core control routines **CCR** wherein the core control routines **CCR** comprise one or more references or pointers to at least one portion i.e. one or more instructions of the **SCT.** Hence, orchestrating the core control routines **CCR** may cause the I/O processor **6** to read one or more instructions provided by the system control table **SCT.**

In one example each of the at least two separate I/O instruction sets may be individually certified according to a suitable certification level or design assurance level (DAL) and/or be subjected to another suitable certification and/or validation process known within the art. Modifications related to hardware of software of the distributed avionics computing system after the first **CCR** and the second **SCT** of the at least two separate I/O instruction sets have been certified only require the second instruction set **SCT** to be modified and re-certified by virtue of the first instructions set **CCR** substantially being independent of the configuration of the distributed avionics computing system. Hence, modifications associated to hardware and/or software of one or more of the plurality of the nodes has no influence of the one or more core control routines **CCR** that have been certified prior to the above mentioned modification, with one exception explained in more detail below. Examples of modifications comprise modifications associated to instantiating new nodes **S1-S4,** hardware topology and software. A modification that requires modification and re-certification of the core control routines **CCR** is modification associated to hardware of the I/O processor **6**.

In one example the first I/O instruction set i.e. core control routines **CCR** may be certified to a suitable design assurance level according to the RTCA DO-178B specification.

The developed one or more I/O instructions may be compiled to machine readable configuration data, such as executable binaries compiled using a compiler, compatible with the I/O processor.

In one example the I/O processor **6** may be configured to function without the associated memory **IM1**. In this example the I/O processor performs its operations based on the predetermined I/O instructions stored elsewhere such as for example stored on the memory **4** associated to the at least one application processor **3**.

In one example the machine readable configuration data may be separate machine readable configuration data, such as for example first machine readable configuration data associated to the I/O processor of a first node S1, second machine readable configuration data associated to the I/O processor of a second node **S2** and third machine readable configuration data associated to the I/O processor of a third node **S3**.

The machine readable configuration data may be stored in one or more portions of the memory**4**, **IM1** or one or more additional memories associated to each node **S1-S4**. Modifications of or additions to the configuration data associated to connectivity can be uploaded to the respective memory **4, IM1** of the nodes **S1-S4** during system design, operation or at maintenance.

In one example at least one of the plurality of computers **S1-S4** comprise the at least one I/O processor.

**In** **fig. 6** an implementation relating to the high level architecture of one of each of the plurality of computers **S1** comprising the I/O processor **6** to be configured is illustrated in accordance with an example of the invention. Each node **S1-S4** may apart from the above described hardware **35** with reference to **fig. 2** and **fig 3****.** comprise a hardware interface system **30**, arranged to by means of a set of interface drivers to provide access to specific hardware such as the memory **4** and the hardware clock. Each node **S1-S4** may further comprise an operating system **25** such as a real-time operating system RTOS. The operating system may be arranged to provide a number of services to a set of applications. The number of services may relate to communication, scheduling, memory management, timing and health monitoring, such as providing local system time and timer services. In providing the services the operating system may be arranged to interact with the hardware **35** by means of the hardware interface system **30**. Each node **S1-S4** may further comprise a configuration data module (CDM) **40**. The configuration data module **40** may be arranged in operative connection with the operating system **25** and the hardware interface system **30** to provide information stored within the configuration data module relating to specific configuration of memory access, scheduling and communication. As an example the configuration data module may be arranged to provide the RTOS with initialization parameters associated to execution, timing and memory configuration.

Each application of the set of applications to be configured and deployed into the distributed avionics computer system may comprise one or more tasks, also referred to as processes. Each of the one or more tasks may denote a logical unit of computation with a single thread of control. As an example an application may be arranged to process sensor readings and control commands provided by an operator by means of one or more control laws, to continuously provide a control signal to an actuator, such as to an actuator associated to an aileron. As an example one of the tasks may be configured to perform a derivative operation on a first data variable retrieved from a sensor at time t. As a further example one of the tasks may be configured to perform a computation at time t and t +1 to provide a second data variable relating to a velocity of an object at time t and t + 1 given a first data variable associated to the acceleration of the object at time t and t + 1.

In one example each node **S1-S4** may be arranged to execute a partitioned real-time operative system RTOS, compliant with ARINC 653, to allow for spatial and temporal partitioning of the set of applications comprised in an integrated modular avionics IMA partitioning module **15**. With reference to **fig. 6** the IMA partitioning module **15** may comprise one or more partitioned applications such as for example a first application, a second application and a third application. Each of the applications may be divided in the IMA module into one or more partitions such as for example a first partition associated to the first application and the second application and a second partition associated to the third application. Each of the applications may further comprise one or more tasks. As an example a first task may be associated to the first application, a second task and a third task may be associated to the second application and a fourth task and fifth task may be associated to the third application. The one or more node **S1**-**S4** may further each comprise an abstraction layer provided by an application programming interface (API) **20** located between application software in the IMA partitioning module and operative system OS. The API **20** may be arranged to provide a set of basic services to the set of applications required for performing their respective tasks and in order to communicate.

In one the example the API may be arranged as an application executive APEX, conforming to the ARINC 653 specifications. The implementation of the ARINC 653 specifications, for high level IMA architecture prevents error propagation when running different applications on a single processor. The partitioning enables to run applications certified to different criticality level measured by Design Assurance Level (DAL) according to the RTCA DO-178B on a single processor.

To allow for internal communication of data between the one or more partitions each partition may be provided with one or more sampling and/or queuing ports accessible to the tasks associated to the partition. The sampling and/or queuing ports i.e. logical ports may be constructed during system design of the software in accordance with ARINC 653 specifications. The sampling and/or queuing ports may each be provided with a unique memory portion, such as a unique memory portion of the memory **4** of the respective node **S1-S4.** Each port may be provided with a unique port address in order for the nodes of the distributed avionics computing system to be able to identify the correct port to retrieve or place units of data to.

In one example a common time reference also referred to as local avionics system time (AST) is provided. To be able to effectively implement time triggered execution and communication across the entire distributed avionics system, it is important that all nodes **S1-S4** have one and the same view of time. To maintain substantially the same view of system time among the system nodes, a synchronization protocol may be implemented in the system to synchronize the local time keeping devices such as the hardware clocks of each node **S1-S4** to the system global time AST.

In one example synchronization data messages indicating the start of the bus period may be sent on a cyclic basis from a master node, such as from a control computer assigned to be responsible for flight safety critical operations. The synchronization data messages may be received by the system nodes whereby each receiving node can use the synchronization message to detect if it is synchronized and respond accordingly such as initiate processing according to its predetermined execution and communication schedule or by re-synchronizing its respective local clock based on time content provided in the synchronization message.

In one example the I/O processor **6** associated to one of the nodes **S1-S4** may be arranged to implement the synchronization protocol and act as master node by means of transmitting synchronization messages to the other nodes of the distributed avionics control computer with its associated one or more I/O processors.
The master node may in one example be provided with a high quality time keeping device such as a high quality crystal oscillator, or be synchronized to external high quality time keeping devices such as by means of receiving PPS pulses from atomic clocks featured in Global Positioning Systems (GPS). The latter may be beneficial in case the system involves nodes and/or LRU:s that perform calculations involving positioning or other calculations that are performed on basis of an external global time value, such as Greenwich Mean Time (GMT).

In one example the system nodes **S1-S4** may be synchronized in time using the IEEE 1588, standard for a precision clock synchronization protocol for networked measurement and control systems.

In one example system start-up may implement an initialization phase until all modules are synchronous. The initialization phase may be initiated by a power up of the distributed avionics system.

In one example the system nodes **S1-S4** may be arranged to operate on basis of a fail silent protocol. The fail silent protocol is based on that only system nodes that are substantially synchronized in time i.e. within a tolerance level in respect of the AST may be arranged to transmit data messages. As soon as each of the system nodes is able to resynchronize, the respective system nodes may be allowed to transmit its data messages according to the bus traffic schedule. This means that effects of local clock jitter, drift or effects resulting from a system startup procedure of each system node may not affect transmitting messages being out of sync with respect to the predefined schedule.

In one example the fail silent protocol may further be arranged to control the execution schedule of the tasks associated to each of the nodes. As an example the fail silent protocol may suspend execution of tasks until the respective node in which the tasks reside, is appropriately synchronized.

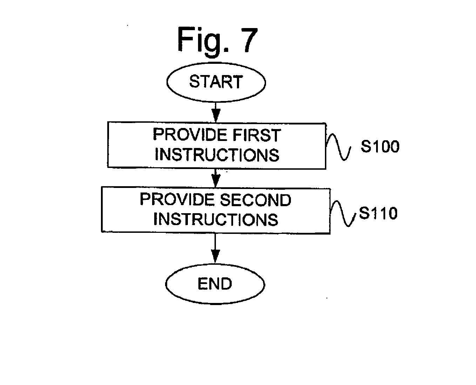

**Fig. 7** schematically illustrates a flow diagram of a method according to an example of the present invention. This example relates to configuring at least one input/output processor associated to a distributed avionics control system comprising a plurality of processing nodes **S1-S4** interconnected in a network **2** via the at least one input/output processing device **6**.

In a first method step **S100** first instructions are provided to the at least one input/output processing device. In more detail providing the first instructions **CCR** comprise providing processing information for the at least one input/output processing device, wherein the processing information is independent of a current configuration of the distributed avionics control system. After the method step **S100** a subsequent method step **S110** is performed.

In the method step **S110** second instructions SCT are provided to the at least one input/output processing device. In more detail providing the second instructions comprise providing instructions being dependent on the current configuration of the distributed avionics control system. After the method step **S110** the method ends.

Many modifications and variations will be apparent to practitioners skilled in the art without departing from the scope of the invention as defined in the appended claims. The examples were chosen and described in order to best explain the principles of the invention and its practical applications, thereby enabling others skilled in the art to understand the invention for various examples and with various modifications as suited to the particular use contemplated.

## Claims

1. A method for configuring at least one configurable input/output processing device (6) arranged to communicate with at least one processing node (S1-S4) associated to a distributed avionics control system comprising a plurality of processing nodes (S1-S4) interconnected in a network (2), wherein each of the plurality of processing nodes (S1-S4) is connected to the network (2) via at least one of said configurable input/output processing device, wherein the plurality of processing nodes (S1-S4) are arranged to execute a plurality of applications (51-52,61), the method is **characterized in** comprising the steps of:
- providing first instructions (CCR) to the at least one configurable input/output processing device, said first instructions comprising processing information for the at least one configurable input/output processing device and being independent of a current configuration of the distributed avionics control system,
- providing second instructions (SCT) to the at least one configurable input/output processing device, said second instructions being dependent on the current configuration of the distributed avionics control system.

2. The method according to claim 1, **characterized in that** the first instructions comprise attributes independent of bus routing and bus traffic associated to the distributed avionics control system and wherein the second instructions comprise attributes dependent on information routing and bus traffic.

3. The method according to any of the preceding claims, **characterized in that** the step of providing the first instructions comprise providing routines related to at least one set of core control routines (CCR) said at least one set of core control routines (CCR) being arranged to provide instructions for the at least one input/output processing device relating to at least one operation of a group of operations comprising at least data format conversion, bus control operations, data validity control and bus time control operations.

4. The method according to any of the preceding claims, **characterized in that** the step of providing the second instructions comprise providing instructions related to at least one system control table (SCT), said at least one system control table (SCT) being arranged to provide instructions for the at least one input/output processing device relating to at least one operation of a group of operations comprising at least bus routing protocol and at least one bus traffic time schedule.

5. The method according to any of the preceding claims, **characterized in that** the step of providing the first instructions (CCR) to the at least one input/output processing device is only performed once irrespective of modifications associated to the distributed avionics control system.

6. The method according to any of the preceding claims, **characterized in that** the method for configuring the at least one configurable input/output processing device is applied to the distributed avionics control system, wherein each of the plurality of nodes in the distributed avionics control system is arranged to be compliant with an ARINC 653 standard.

7. A configurable input/output processing device (6) arranged to control data traffic associated to a distributed avionics control system comprising a plurality of processing nodes (S1-S4) interconnected in a network (2), wherein each of the plurality of processing nodes (S1-S4) is connected to the network (2) via at least one of said configurable input/output processing device, the configurable input/output processing device comprising:
- memory means (IM1) arranged to store information associated to data traffic and information associated to configuration data controlling the operations of the input/output processing device,
- at least one processing means (IP1) arranged to control data traffic based on the information associated to configuration data,
**characterized in** comprising:
- first instructions (CCR) stored on the memory means of the at least one input/output processing device, said first instructions comprising processing information for the at least one input/output processing device and being independent of a current configuration of the distributed avionics control system,
- second instructions (SCT) stored on the memory of the at least one input/output processing device, said second instructions being dependent on the current configuration of the distributed avionics control system.

8. The configurable input/output processing device according to claim 7, **characterized in that** the first instructions comprise routines related to at least one set of core control routines (CCR) said at least one set of core control routines (CCR) comprising instructions for the at least one input/output processing device relating to at least one operation of a group of operations comprising at least data format conversion, bus control operations, data validity control and bus time control operations.

9. The configurable input/output processing device according to any of the claim 7-8, **characterized in that** the second instructions comprise instructions related to at least one system control table (SCT), said at least one system control table (SCT) being arranged to provide instructions for the at least one input/output processing device relating to at least one operation of a group of operations comprising at least information routing protocol and at least one bus traffic time schedule.

10. The configurable input/output processing device according to any of the claims 7-9, **characterized in that** the first instructions (CCR) associated to the at least one input/output processing device is arranged to be configured once irrespective of modifications associated to the distributed avionics control system.

11. A distributed avionics control system comprising a plurality of processing nodes (S1-S4) interconnected in a network (2), wherein each of the plurality of processing nodes (S1-S4) is connected in the network (2) via at least one of said configurable input/output processing device according to any of the claims 7-10.

12. A computer programme comprising a programme code for performing the method steps of any of the claims 1-6, when said computer programme is run on a computer.

13. A computer programme product comprising a program code stored on a computer readable media for performing the method steps of any of the claims 1-6, when said computer programme is run on the computer.

14. A computer programme product directly storable in an internal memory of a computer, comprising a computer programme for performing the method steps of any of the claims 1-6, when said computer programme is run on the computer.

## Patentansprüche

1. Verfahren zum Konfigurieren mindestens einer konfigurierbaren Eingabe/Ausgabe-Verarbeitungseinrichtung (6), die ausgebildet ist, mit mindestens einem Verarbeitungsknoten (S1-S4) zu kommunizieren, der einen verteilten Avionik-Steuersystem mit mehreren Verarbeitungsknoten (S1-S4) zugeordnet ist, die miteinander in einem Netzwerk (2) verbunden sind, wobei jeder der mehreren Verarbeitungsknoten (S1-S4) mit dem Netzwerk (2) über mindestens eine der konfigurierbaren Eingabe/Ausgabe-Verarbeitungseinrichtung verbunden ist, wobei die mehreren Verarbeitungsknoten (S1-S4) ausgebildet sind, mehrere Anwendungen (51-52,61) auszuführen, **dadurch gekennzeichnet ist, dass** das Verfahren die Schritte umfasst:
- Bereitstellen erster Befehle (CCR) für die mindestens eine konfigurierbare Eingabe/Ausgabe-Verarbeitungseinrichtung, wobei die ersten Befehle eine Verarbeitungsinformation für die mindestens eine konfigurierbare Eingabe/Ausgabe-Verarbeitungseinrichtung aufweisen und unabhängig von einer aktuellen Konfiguration des verteilten Avionik-Steuersystems sind,
- Bereitstellen zweiter Befehle (SCT) für die mindestens eine konfigurierbare Eingabe/Ausgabe-Verarbeitungseinrichtung, wobei die zweiten Befehle von der aktuellen Konfiguration des verteilten Avionik-Steuersystems abhängig sind.

2. Verfahren nach Anspruch 1, **dadurch gekennzeichnet, dass** die ersten Befehle Attribute aufweisen, die unabhängig sind von Busleitung und Busverkehr, die zu dem verteilten Avionik-Steuersystem gehören, und wobei die zweiten Befehle Attribute aufweisen, die von Informationsweiterleitung und Busverkehr abhängig sind.

3. Verfahren nach einem der vorhergehenden Ansprüche, **dadurch gekennzeichnet, dass** der Schritt des Bereitstellens der ersten Befehle Bereitstellen von Routinen umfasst, die mit mindestens einer Gruppe von Kernsteuerungsroutinen (CCR) in Beziehung stehen, wobei die mindestens eine Gruppe aus Kernsteuerungsroutinen (CCR) ausgebildet ist, Befehle für die mindestens eine Eingabe/Ausgabe-Verarbeitungseinrichtung bereitzustellen, die mindestens eine Operation aus einer Gruppe von Operationen betreffen, die zumindest Datenformatumwandlung, Bussteuerungsoperationen, Datengültigkeitssteuerung und Buszeitsteueroperationen umfassen.

4. Verfahren nach einem der vorhergehenden Ansprüche, **dadurch gekennzeichnet, dass** der Schritt des Bereitstellens der zweiten Befehle Bereitstellen von Befehlen umfasst, die mindestens eine Systemsteuertabelle (SCT) betreffen, wobei die mindestens eine Systemsteuertabelle (SCT) ausgebildet ist, Befehle für die mindestens eine Eingabe/Ausgabe-Verarbeitungseinrichtung bereitzustellen, die mindestens eine Operation aus einer Gruppe von Operationen betreffen, die zumindest Busweiterleitungsprotokoll und mindestens einen Busverkehrzeitablauf umfassen.

5. Verfahren nach einem der vorhergehenden Ansprüche, **dadurch gekennzeichnet, dass** der Schritt des Bereitstellens der ersten Befehle (CCR) für die mindestens eine Eingabe/Ausgabe-Verarbeitungseinrichtung unabhängig von das verteilte Avionik-Steuersystem betreffenden Modifizierungen nur einmal ausgeführt wird.

6. Verfahren nach einem der vorhergehenden Ansprüche, **dadurch gekennzeichnet, dass** das Verfahren zum Konfigurieren der mindestens einen konfigurierbaren Eingabe/Ausgabe-Verarbeitungseinrichtung auf das verteilte Avionik-Steuersystem angewendet wird, wobei jede der mehreren Knoten in dem verteilten Avionik-Steuersystem so ausgebildet ist, dass er mit einem ARINC 653-Standard verträglich ist.

7. Konfigurierbare Eingabe/Ausgabe-Verarbeitungseinrichtung (6), die ausgebildet ist, Datenverkehr zu steuern, der einem verteilten Avionik-Steuersystem mit mehreren Verarbeitungsknoten (S1-S4), die in einem Netzwerk (2) miteinander verbunden sind, zugeordnet ist, wobei jeder der mehreren Verarbeitungsknoten (S1-S4) mit dem Netzwerk (2) über mindestens eine der konfigurierbaren Eingabe/Ausgabe-Verarbeitungseinrichtung verbunden ist, wobei die konfigurierbare Eingabe/Ausgabe-Verarbeitungseinrichtung umfasst:
- eine Speichereinrichtung (IM1), die ausgebildet ist, Datenverkehr zugeordnete Information und Information, die Konfigurationsdaten zugeordnet ist, die die Operationen der Eingabe/Ausgabe-Verarbeitungseinrichtung steuern, zu speichern,
- mindestens ein Verarbeitungsmittel (IP1), das ausgebildet ist, Datenverkehr auf der Grundlage der Konfigurationsdaten zugeordneten Information zu steuern,
**dadurch gekennzeichnet, dass** sie umfasst:
- erste Befehle (CCR), die in der Speichereinrichtung der mindestens einen Eingabe/Ausgabe-Verarbeitungseinrichtung gespeichert sind, wobei die ersten Befehle Verarbeitungsinformation für die mindestens eine Eingabe/Ausgabe-Verarbeitungseinrichtung umfassen und unabhängig von einer aktuellen Konfiguration des verteilten Avionik-Steuersystems sind,
- zweite Befehle (SCT), die in dem Speicher der mindestens einen Eingabe/Ausgabe-Verarbeitungseinrichtung gespeichert sind, wobei die zweiten Befehle von der aktuellen Konfiguration des verteilten Avionik-Steuersystems abhängig sind.

8. Konfigurierbare Eingabe/Ausgabe-Verarbeitungseinrichtung nach Anspruch 7, **dadurch gekennzeichnet, dass** die ersten Befehle Routinen bezüglich mindestens einer Gruppe aus Kernsteuerungsroutinen (CCR) umfassen, wobei die mindestens eine Gruppe aus Kernsteuerungsroutinen (CCR) Befehle für die mindestens eine Eingabe/Ausgabe-Verarbeitungseinrichtung umfassen, die mindestens eine Operation aus einer Gruppe von Operationen betreffen mit mindestens Datenformatumwandlung, Bussteueroperationen, Datengültigkeitssteuer- und Buszeitsteuer-Operationen.

9. Konfigurierbare Eingabe/Ausgabe-Verarbeitungseinrichtung nach einem der Ansprüche 7-8, **dadurch gekennzeichnet, dass** die zweiten Befehle solche Befehle umfassen, die mindestens eine Systemsteuertabelle (SCT) betreffen, wobei die mindestens eine Systemsteuertabelle (SCT) ausgebildet ist, Befehle für die mindestens eine Eingabe/Ausgabe-Verarbeitungseinrichtung bereitzustellen, die mindestens eine Operation einer Gruppe von Operationen betreffen, die zumindest ein Informationsweiterleitungsprotokoll und mindestens einen Busverkehrzeitablauf umfassen.

10. Konfigurierbare Eingabe/Ausgabe-Verarbeitungseinrichtung nach einem der Ansprüche 7-9, **dadurch gekennzeichnet, dass** die ersten Befehle (CCR), die der mindestens einen Eingabe/Ausgabe-Verarbeitungseinrichtung zugeordnet sind, ausgebildet sind, unabhängig von das verteilte Avionik-Steuersystem betreffenden Modifizierungen einmalig konfiguriert zu werden.

11. Verteiltes Avionik-Steuersystem mit mehreren Verarbeitungsknoten (S1-S4), die in einem Netzwerk (2) miteinander verbunden sind, wobei jeder der mehreren Verarbeitungsknoten (S1-S4) in dem Netzwerk (2) über mindestens eine der konfigurierbaren Eingabe/Ausgabe-Verarbeitungseinrichtung gemäß einem der Ansprüche 7-10 verbunden ist.

12. Computerprogramm mit Programmcode zum Ausführen der Verfahrensschritte eines der Ansprüche 1-6, wobei das Computerprogramm auf einem Computer ausgeführt wird.

13. Computerprogrammprodukt mit einem auf einem computerlesbaren Medium gespeicherten Progamm-Code zum Ausführen der Verfahrensschritte eines der Ansprüche 1-6, wenn das Computerprogramm auf dem Computer ausgeführt wird.

14. Computerprogrammprodukt, das direkt in einem internen Speicher eines Computers speicherbar ist und ein Computerprogramm umfasst zur Ausführung der Verfahrensschritte eines der Ansprüche 1-6, wenn das Computerprogramm auf dem Computer ausgeführt wird.

## Revendications

1. Méthode pour configurer au moins un dispositif de traitement d'entrée/sortie configurable (6) agencé pour communiquer avec au moins un noeud de traitement (S1-S4) associé à un système de commande avionique réparti comprenant une pluralité de noeuds de traitement (S1-S4) interconnectés dans un réseau (2), dans laquelle chacun de la pluralité de noeuds de traitement (S1-S4) est connecté au réseau (2) via au moins un dudit dispositif de traitement d'entrée/sortie configurable, dans laquelle la pluralité de noeuds de traitement (S1-S4) est agencé pour exécuter une pluralité d'applications (51-52, 61), la méthode est **caractérisée en ce qu'**elle comprend les étapes consistant à :
- fournir des premières instructions (CCR) au au moins un dispositif de traitement d'entrée/sortie configurable, lesdites premières instructions comprenant des informations de traitement pour le au moins un dispositif de traitement d'entrée/sortie configurable et étant indépendantes d'une configuration actuelle du système de commande avionique réparti,
- fournir des secondes instructions (SCT) au au moins un dispositif de traitement d'entrée/sortie configurable, lesdites secondes instructions étant dépendantes de la configuration actuelle du système de commande avionique réparti.

2. Méthode selon la revendication 1, **caractérisée en ce que** les premières instructions comprennent des attributs indépendants de routage de bus et de trafic de bus associés au système de commande avionique réparti et dans laquelle les secondes instructions comprennent des attributs dépendants d'informations de routage et de trafic de bus.

3. Méthode selon l'une quelconque des revendications précédentes, **caractérisée en ce que** l'étape consistant à fournir les premières instructions comprend la fourniture de routines liées à au moins un ensemble de routines de commande de coeur (CCR), ledit au moins un ensemble de routines de commande de coeur (CCR) étant agencé pour fournir des instructions pour le au moins un dispositif de traitement d'entrée/sortie concernant au moins une opération d'un groupe d'opérations comprenant au moins une conversion de format de données, des opérations de commande de bus, des opérations de commande de validité de données et de commande de temps de bus.

4. Méthode selon l'une quelconque des revendications précédentes, **caractérisée en ce que** l'étape consistant à fournir les secondes instructions comprend la fourniture d'instructions liées à au moins une table de commande de système (SCT), ladite au moins une table de commande de système (SCT) étant agencée pour fournir des instructions pour le au moins un dispositif de traitement d'entrée/sortie concernant au moins une opération d'un groupe d'opérations comprenant au moins un protocole de routage de bus et au moins un planning de temps de trafic de bus.

5. Méthode selon l'une quelconque des revendications précédentes, **caractérisée en ce que** l'étape consistant à fournir les premières instructions (CCR) au au moins un dispositif de traitement d'entrée/sortie n'est effectuée qu'une fois, indépendamment de modifications associées au système de commande avionique réparti.

6. Méthode selon l'une quelconque des revendications précédentes, **caractérisée en ce que** la méthode pour configurer le au moins un dispositif de traitement d'entrée/sortie configurable est appliquée au système de commande avionique réparti, dans laquelle chacun de la pluralité de noeuds dans le système de commande avionique réparti est agencé pour être conforme à une norme ARINC 653.

7. Dispositif de traitement d'entrée/sortie configurable (6) agencé pour commander un trafic de données associé à un système de commande avionique réparti comprenant une pluralité de noeuds de traitement (S1-S4) interconnectés dans un réseau (2), dans lequel chacun de la pluralité de noeuds de traitement (S1-S4) est connecté au réseau (2) via au moins un dudit dispositif de traitement d'entrée/sortie configurable, le dispositif de traitement d'entrée/sortie configurable comprenant :
- des moyens de mémoire (IM1) agencés pour stocker des informations associées à un trafic de données et des informations associées à des données de configuration commandant les opérations du dispositif de traitement d'entrée/sortie,
- au moins un moyen de traitement (IP1) agencé pour commander un trafic de données sur la base des informations associées à des données de configuration, **caractérisé en ce qu'**il comprend :
- des premières instructions (CCR) stockées sur les moyens de mémoire du au moins un dispositif de traitement d'entrée/sortie, lesdites premières instructions comprenant des informations de traitement pour le au moins un dispositif de traitement d'entrée/sortie et étant indépendantes d'une configuration actuelle du système de commande avionique réparti,
- des secondes instructions (SCT) stockées sur la mémoire du au moins un dispositif de traitement d'entrée/sortie, lesdites secondes instructions étant dépendantes de la configuration actuelle du système de commande avionique réparti.

8. Dispositif de traitement d'entrée/sortie configurable selon la revendication 7, **caractérisé en ce que** les premières instructions comprennent des routines liées à au moins un ensemble de routines de commande de coeur (CCR), ledit au moins un ensemble de routines de commande de coeur (CCR) comprenant des instructions pour le au moins un dispositif de traitement d'entrée/sortie concernant au moins une opération d'un groupe d'opérations comprenant au moins une conversion de format de données, des opérations de commande de bus, des opérations de commande de validité de données et de commande de temps de bus.

9. Dispositif de traitement d'entrée/sortie configurable selon l'une quelconque des revendications 7 à 8, **caractérisé en ce que** les secondes instructions comprennent des instructions liées à au moins une table de commande de système (SCT), ladite au moins une table de commande de système (SCT) étant agencée pour fournir des instructions pour le au moins un dispositif de traitement d'entrée/sortie concernant au moins une opération d'un groupe d'opérations comprenant au moins un protocole de routage d'informations et au moins un planning de temps de trafic de bus.

10. Dispositif de traitement d'entrée/sortie configurable selon l'une quelconque des revendications 7 à 9, **caractérisé en ce que** les premières instructions (CCR) associées au au moins un dispositif de traitement d'entrée/sortie sont agencées pour être configurées une fois, indépendamment de modifications associées au système de commande avionique réparti.

11. Système de commande avionique réparti comprenant une pluralité de noeuds de traitement (S1-S4) interconnectés dans un réseau (2), dans lequel chacun de la pluralité de noeuds de traitement (S1-S4) est connecté dans le réseau (2) via au moins un dudit dispositif de traitement d'entrée/sortie configurable selon l'une quelconque des revendications 7 à 10.

12. Programme informatique comprenant un code de programme pour effectuer les étapes de la méthode selon l'une quelconque des revendications 1 à 6, lorsque ledit programme informatique est exécuté sur un ordinateur.

13. Produit de programme informatique comprenant un code de programme stocké sur un support lisible par ordinateur pour effectuer les étapes de la méthode selon l'une quelconque des revendications 1 à 6, lorsque ledit programme informatique est exécuté sur l'ordinateur.

14. Produit de programme informatique stockable directement dans une mémoire interne d'un ordinateur, comprenant un programme informatique pour effectuer les étapes de la méthode selon l'une quelconque des revendications 1 à 6, lorsque ledit programme informatique est exécuté sur l'ordinateur.
